# EUROPÄISCHE PATENTSCHRIFT

(11) **EP 1 106 333 B1**
(45) Veröffentlichungstag und Bekanntmachung des Hinweises auf die Patenterteilung: **22.08.2007**
(21) Anmeldenummer: 00811041.3
(22) Anmeldetag: 07.11.2000
(51) Int. Cl.: B29C 70/22, B29B 15/12

(54) **Verfahren zur Herstellung eines flächenartig ausgedehnten Verbundwerkstoffs mit Fasern und Kunstoffimprägnierung**
Method for manufacturing a flat, extended composite material with fibres and plastic impregnation
Procédé de fabrication d'un matériau composite allongé de forme plate avec fibres et imprégnation de plastique

(30) Priorität: 03.12.1999 EP 99811116
(43) Veröffentlichungstag der Anmeldung: 13.06.2001
(73) Patentinhaber: Arova Schaffhausen AG, 8200 Schaffhausen (CH)
(72) Erfinder: Vodermayer, Albert Maria, Dr., 8305 Dietlikon (CH); Auersch, Wolfram Fritz Willi, 8542 Wiesendangen (CH)
(74) Vertreter: Sulzer Management AG

(56) Entgegenhaltungen:
- DE-U- 29 722 652
- US-A- 3 930 091
- US-A- 3 983 282
- US-A- 5 212 010
- US-A- 5 401 564
- US-A- 5 836 715

## Beschreibung

Die Erfindung betrifft ein Verfahren zur Herstellung eines flächenartig ausgedehnten Verbundwerkstoffs mit Fasern und Kunststoffimprägnierung gemäss Oberbegriff von Anspruch 1.

Aus der DE-A- 41 21 915 ist ein Verfahren bekannt, nämlich eine Druckimprägnierung, bei der ein endloser Verstärkungsfaserstrang mit einem thermoplastischen Polymer imprägniert wird. Bei diesem Verfahren wird der Faserstrang zuerst in einem Bad, das eine Dispersion von festen Thermoplastpartikeln enthält, mit den Partikeln imprägniert. Nach dem Imprägnierungsbad wird das Dispergiermittel in einem Trocknungsofen aus dem imprägnierten Faserstrang verdampft. Anschliessend wird der trockene Faserstrang durch einen Ofen geführt, in dem die Partikel schmelzen. Nach einer Konsolidierung liegt ein bändchenförmiger Faserverbundstoff mit einer festen Polymermatrix vor. Solche Bändchen können zu Geweben, Geflechten oder Gittern angeordnet und durch eine Pultrusion, bei der die Polymermatrix vorübergehend wieder aufgeschmolzen wird, zu flächenartig ausgedehnten Verbundwerkstoffen umgeformt werden. Solche Verbundwerkstoffe können auch in die Form einer profilierten Stange gebracht werden.

Flächenartig ausgedehnten Verbundwerkstoffe eignen sich zur Verstärkung von Bauteilen, die als Komponenten im Hochbau, Fahrzeugbau, Leichtbau oder Apparate- und Gerätebau verwendet werden. Der Verbundwerkstoff wird zur Verstärkung mit einem Verbindungsmittel, d. h. mit einem Klebstoff, auf das Bauteil aufgebracht.

Bei Verstärkungen von Bauteilen werden auch flexible Gewebe aus Fasersträngen verwendet, die mit einer Kunststoffmasse auf zu verstärkende Teilflächen des Bauteils aufgeklebt werden. Solche Verstärkungen werden in erster Linie bei gekrümmten Flächen und an Kanten vorgenommen. In der Praxis ergeben sich bei dieser Verstärkungsmethode allerdings Probleme. Die Faserstränge der flexiblen Gewebe lassen sich gegeneinander verschieben, so dass leicht ein unregelmässig mit Buckeln deformiertes Gebilde entsteht. Ein derartig deformiertes Gewebe lässt sich nicht mehr glatt auf die zu verstärkende Fläche aufbringen. Für eine maximale Steifigkeit und Festigkeit der Verstärkung müssten die Fasern vollständig ausgerichtet sein; eine solche Faserausrichtung ist aber mit einem deformierten Gewebe nicht möglich.

Aufgabe der Erfindung ist es, ein Verfahren zur Herstellung von flächenartig ausgedehnten Verbundwerkstoffen zu schaffen, die sich zur Verstärkung von gekrümmten Flächen und Kanten eignen. Diese Aufgabe wird durch das im Anspruch 1 definierte Verfahren gelöst.

Der flächenartig ausgedehnte Verbundwerkstoff enthält Fasern, die mit Kunststoff imprägniert sind. Der Verbundwerkstoff umfasst mindestens zwei Scharen von parallelen Fasersträngen, die sich in verschiedene Richtungen erstrecken und die ein Gewebe, Geflecht oder Gitter bilden. Die Faserstränge können bündel- oder bandförmig sein. Die Fasern einer ersten Schar sind mit wesentlich mehr Kunststoff imprägniert als die Fasern einer zweiten und gegebenenfalls einer weiteren Schar. Der Verbundwerkstoff ist in Richtung der Fasern der ersten Schar steif und quer zu dieser Richtung flexibel. Mit Vorteil bestehen Öffnungen zwischen den Fasersträngen.

Die abhängigen Ansprüche 2 bis 8 betreffen vorteilhafte Ausführungsformen des erfindungsgemässen Verfahrens.

Mit dem erfindungsgemäss hergestellten Verbundwerkstoff, der semiflexibel ist, können Bauteile der oben genannten Gebiete an Kanten oder zylinderischen Teilflächen verstärkt werden. Er kann dabei in einer oder mehreren Lagen aufgeklebt oder aufgeschweisst werden. Beim Aufkleben ist es vorteilhaft, wenn Öffnungen zwischen den Fasersträngen bestehen. Dank der teilweisen Versteifung und einer gegenseitigen Fixierung der quer zu einander angeordneten Faserstränge ist die Gefahr von ungünstigen Deformationen des erfindungsgemässen Verbundwerkstoffs ausgeräumt.

Nachfolgend wird die Erfindung anhand der Zeichnungen erläutert. Es zeigen:
- Fig. 1: einen Ausschnitt aus einem Imprägnierungsbad,
- Fig. 2: einen Querschnitt durch einen erfindungsgemässen Verbundwerkstoffs, d.h. erfindungsgemäss hergestellten Verbundwerkstoff,
- Fig. 3: ein Schrägbild zu einem ähnlichen Verbundwerkstoff und
- Fig. 4: eine Draufsicht auf eine weitere Ausführungsform des erfindungsgemässen Verbundwerkstoffs.

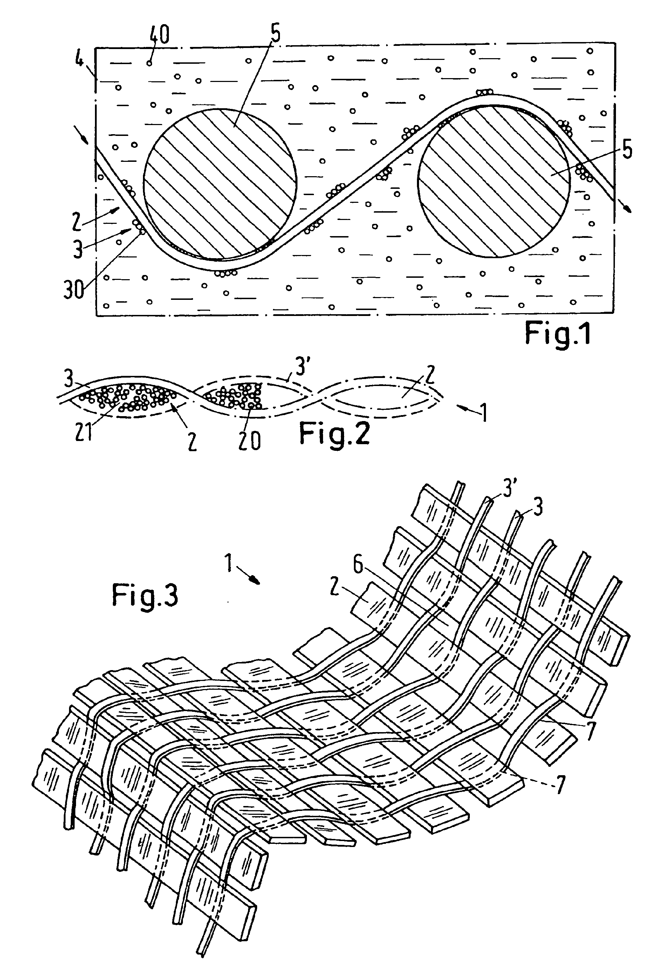

Das in der Einleitung kurz erläuterte Imprägnierungsverfahren ist bei der Herstellung des erfindungsgemässen Verbundwerkstoffs 1 anwendbar. Bei diesem Verfahren werden in einem ersten Schritt nicht imprägnierte Faserstränge 2 und 3, die bündel- oder bandförmig sein können, zu einer textilen Fläche verwoben. Die zu versteifenden Faserstränge 2 werden dabei zur Bildung einer Kette des Gewebes verwendet. Diese Faserstränge 2 bilden eine erste Schar von Fasersträngen. Ein zweite Schar ist durch Faserstränge 3 gegeben, mit denen der Schusseintrag durchgeführt wird. Als zweiter Schritt des Verfahrens folgt eine Druckimprägnierung, die anhand der Fig. 1 ausschnittsweise illustriert wird. Das Gewebe wird in Kettrichtung, d. h. in Richtung der Faserstränge 2 durch eine Dispersion 4 eines Imprägnierungsbads gezogen und dabei unter einer Spannkraft um zylindrische Umlenkbolzen 5 geführt. Dabei erfolgt die Imprägnierung. Die weiteren Schritte wie Trocknung und Aufschmelzen des Thermoplasts wird wie bei der bekannten Druckimprägnierung durchgeführt.

An den Umlenkbolzen 5 werden die Stränge 2, die aus Fasern 20 zusammengesetzt sind, quer zur Transportrichtung gespreizt und Thermoplastpartikel 40 aus der Dispersion 4 zwischen die Fasern 20 eingelagert. Bei jeder Umlenkung um einen Bolzen 5 wird eine von der Badkonzentration und dem Faserdurchmesser abhängige Menge an Thermoplast aufgenommen. Auch die quer zu den Fasersträngen 2 eingewobenen Stränge 3, die sich aus Fasern 30 zusammensetzen, nehmen Thermoplastpartikel 40 auf, jedoch in einem geringerem Ausmass, da die Stränge 3 nicht gespreizt werden . Dies ist erwünscht, da sich so eine angestrebte Semiflexibilität des herzustellenden Verbundwerkstoffs 1 ergibt: In diesem Produkt sollen die Fasern 20 der ersten Schar mit wesentlich mehr Kunststoff imprägniert sein als die Fasern 30 der zweiten Schar, so dass der Verbundwerkstoff 1 in Richtung der Fasern 20 der ersten Schar steif und quer zu dieser Richtung flexibel ist.

Fig. 2 zeigt einen Querschnitt durch den hergestellten Verbundwerkstoff 1, der durch zwei Scharen von Fasersträngen 2 und 3 aufgebaut ist, die in Bindungspunkten 7 (siehe Fig. 3) verkreuzt sind. Weitgehend vollständig imprägnierte, d. h. in eine Polymermatrix 21 eingebettete Fasern 20 bilden die Faserstränge 2, die im vorliegenden Ausführungsbeispiel einen linsenförmigen Querschnitt haben. Die quer verlaufenden Faserstränge 3 (oder Strang 3'; weiter hinten liegend und gestrichtelt dargestellt) sind mit nur einem geringen Anteil an Thermoplast imprägniert, so dass eine gute Flexibilität erhalten bleibt. Die Fig. 3 illustriert die Semiflexibilität des Verbundwerkstoffs 1, mit dem quer zu den Fasersträngen 2 enge Biegeradien möglich sind. In Fig. 3 sind auch Öffnungen 6 zwischen den Fasersträngen 2, 3, 3' zu erkennen, die für ein Aufkleben des Verbundwerkstoffs 1 auf einem zu verstärkenden Bauteil vorteilhaft sind.

Vorteilhaft ist es, wenn die Fasern 20 der ersten Schar wesentlich kleinere Durchmesser aufweisen als die Fasern 30 der zweiten Schar; denn je grösser die Durchmesser der Fasern 30 sind, desto geringer ist die Imprägnierung der Stränge 3 bei gleich bleibenden Verfahrensparametern (Konzentration und Grösse der Thermoplastpartikel 40; Anzahl der Umlenkbolzen 5). Beispielsweise können für die feinen Fasern 20 der ersten Schar Kohlefasern und für die groben Fasern 30 der zweiten Schar Glasfasern gewählt werden. Die Faserstränge 2 der ersten Schar sollten eine Imprägnierung aufweisen, die - bezogen auf die maximale Kapazität an aufnehmbarem Kunststoff - mindestens 35% beträgt. Die Imprägnierung der weiteren Faserstränge 3 sollte kleiner als 20%, vorzugsweise kleiner als 5% sein.

Der Kunststoff für die Imprägnierung ist mit Vorteil ein Thermoplast oder besteht weitgehend aus einem solchen. Er kann auch einen kleinen Anteil an pulverförmigem Duroplast und/oder pulverförmigem, anorganischem Material enthalten.

Ein weiteres Herstellverfahren besteht darin, dass in einem ersten Schritt steife, imprägnierte Faserstränge mit nicht imprägnierten Fasersträngen zu einer textilen Fläche verwoben werden, wobei die nicht imprägnierten Faserstränge zur Bildung einer Kette des Gewebes verwendet werden. Bei einem zweiten Schritt zur Durchführung einer Druckimprägnierung wird das Gewebe wieder in Kettrichtung durch ein Imprägnierbad durchgezogen und eine nur teilweise Imprägnierung von weniger als 20%, vorzugsweise weniger als 5% - bezogen auf die maximale Kapazität an aufnehmbarem Kunststoff - durchgeführt.

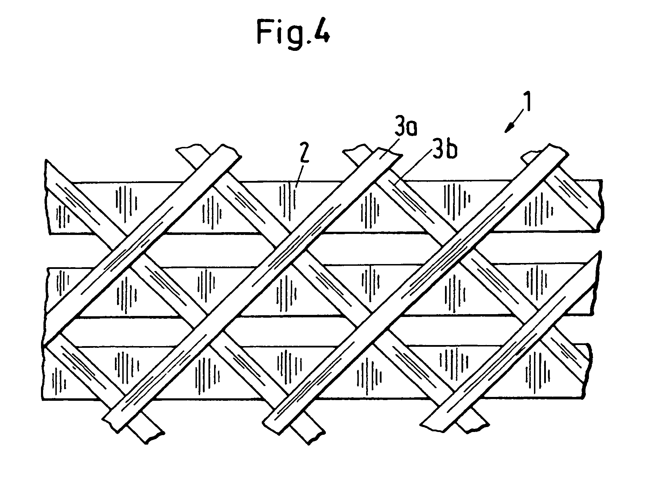

Fig. 4 ist eine Draufsicht auf einen weiteren semiflexiblen Verbundwerkstoff. Hier bilden die flexiblen Faserstränge 3a und 3b eine zweite sowie eine dritte Schar. Bei dieser Ausführungsform sind steife imprägnierte Faserstränge 2, die parallel zu einander angeordnet sind, mit flexiblen imprägnierten Fasersträngen 3a und 3b zu einem Gitter verschweisst worden. Hier bilden die Stränge 3a und 3b zwei Scharen von Fasersträngen. Das Verschweissen wird unter einem teilweisen Aufschmelzen der Kunststoffimprägnierung sowie einem Zusammenpressen der Faserstränge 2, 3a und 3b durchgeführt. Die Faserstränge 3a können statt auf der gleichen Seite wie die Faserstränge 3b beispielsweise auch auf der hinteren Seite der Faserstränge 2 befestigt werden.

## Patentansprüche

1. Verfahren zum Herstellen eines flächenartig ausgedehnten Verbundwerkstoffs (1) mit Fasern (20, 30) und Kunststoffimprägnierungen (21), welcher Verbundwerkstoff mindestens eine erste und eine zweite Schar von parallelen, bündel- oder bandförmigen Fasersträngen (2, 3) umfasst, die in verschiedene Richtungen sich erstreckend ein Gewebe, Geflecht oder Gitter bilden, wobei die erste Schar aus nicht imprägnierten Fasersträngen (2) besteht und in einem ersten Schritt des Verfahrens die Faserstränge zu dem Gewebe, Geflecht oder Gitter verwoben, geflochten bzw. in Gitterform gebracht werden,
**dadurch gekennzeichnet, dass** in einem zweiten Schritt eine Druckimprägnierung durchgeführt wird, bei der das Gewebe, Geflecht oder Gitter in Richtung der Fasern (20) der ersten Schar durch ein Imprägnierungsbad (4) durchgezogen wird, wobei die Faserstränge (2) der ersten Schar jeweils bei Umlenkungen um Bolzen des Imprägnierungsbads höhere Mengen an Kunststoff (21) aufnehmen als die Faserstränge (3) der zweiten Schar und so der Verbundwerkstoff (1) in Richtung der Fasern (20) der ersten Schar steif und quer zu dieser Richtung flexibel ausgebildet wird.

2. Verfahren nach Anspruch 1, **dadurch gekennzeichnet, dass** im ersten Schritt nicht imprägnierte Faserstränge (2, 3) zu einem Gewebe verwoben werden, wobei die zu versteifenden Faserstränge (2) zur Bildung einer Kette des Gewebes und die weiteren Faserstränge (3) für einen Schusseintrag verwendet werden.

3. Verfahren nach Anspruch 1 oder 2, **dadurch gekennzeichnet, dass** beim ersten Schritt Öffnungen zwischen den Fasersträngen (2, 3) bestehen gelassen werden.

4. Verfahren nach einem der Ansprüche 1 bis 3, **dadurch gekennzeichnet, dass** bei einem Gewebe für die Faserstränge (2) der ersten Schar wesentlich feinere Fasern (20) als für die Faserstränge (3) der zweiten Schar verwendet werden.

5. Verfahren nach einem der Ansprüche 1 bis 4, **dadurch gekennzeichnet, dass** solcherart imprägniert wird, dass die Faserstränge (2) der ersten Schar eine Imprägnierung aufweisen, die - bezogen auf die maximale Kapazität an aufnehmbarem Kunststoff - mindestens 35% beträgt, während die Imprägnierung der weiteren Faserstränge (3, 3'; 3a, 3b) kleiner als 20%, vorzugsweise kleiner als 5% ist.

6. Verfahren nach einem der Ansprüche 1 bis 5, **dadurch gekennzeichnet, dass** für die Imprägnierung ein Thermoplast verwendet wird, dem ein pulverförmiger Duroplast und/oder ein pulverförmiges, anorganisches Material zugemischt sein kann.

7. Verfahren nach einem der Ansprüche 1 bis 6, **dadurch gekennzeichnet, dass** ein Gewebe erzeugt wird, für welche die Fasern (20) der ersten Schar wesentlich kleinere Durchmesser als die Fasern (30) der zweiten oder weiteren Schar aufweisen, wobei insbesondere die feinen Fasern (20) der ersten Schar aus Kohlenstoff und die groben Fasern (30) der zweiten oder weiteren Schar aus Glas bestehen.

8. Verfahren nach einem der Ansprüche 1 bis 7, **dadurch gekennzeichnet, dass** für die erste Schar imprägnierte Faserstränge (2) verwendet werden und dass eine Imprägnierung von weniger als 20%, vorzugsweise weniger als 5% - bezogen auf die maximale Kapazität an aufnehmbarem Kunststoff - durchgeführt wird.

## Claims

1. A method for the manufacture of an areally extended composite material (1) with fibres (20, 30) and plastic impregnations (21), said composite material including at least a first and a second family of parallel, bundle-like or band-like fibre strands (2, 3) which extend in different directions and form a fabric, braid or grid, wherein the first family consists of non-impregnated fibre strands (2) and the fibre strands are respectively woven, braided or brought into grid-like form to form the fabric, braid or grid, **characterized in that** in a second step a pressure impregnation is carried out in which the fabric, braid or grid is drawn in the direction of the fibres (20) of the first family through an impregnation bath (4), with the fibre strands (2) of the first family respectively taking up larger quantities of plastic (21) during deflections around pins of the impregnation bath than the fibre strands (3) of the second family and the composite material (1) is thus made stiff in the direction of the fibres (20) of the first family and flexible transverse to this direction.

2. A method in accordance with claim 1, **characterized in that** non-impregnated fibre strands (2, 3) are woven into a fabric in the first step, with the fibre strands (2) to be stiffened being used to form a warp of the fabric and the fibre strands (3) being used for a weft insertion.

3. A method in accordance with claim 1 or claim 2, **characterized in that** openings are left between the fibre strands (2, 3) during the first step.

4. A method in accordance with any one of the claims 1 to 3, **characterized in that** in a fabric substantially finer fibres (20) are used to the fibre strands (2) of the first family than for the fibre strands (3) of the second family.

5. A method in accordance with any one of the claims 1 to 4, **characterized in that** the impregnation is carried out in such a way that the fibre strands (2) of the first family have an impregnation which, related to the maximum capacity of plastic which can be taken up - amounts to at least 35 % whereas the impregnation of the further fibre strands (3, 3', 3a, 3b) is smaller than 20 %, preferably smaller than 5 %.

6. A method in accordance with any one of the claims 1 to 5, **characterized in that** a thermoplastic material is used for the impregnation to which a powder-like duroplastic and/or a powder-like inorganic material can be admixed.

7. A method in accordance with any one of the claims 1 to 6, **characterized in that** a fabric is produced for which the fibres (20) of the first family have substantially smaller diameters than the fibres (30) of the second or further family, with the fine fibres (20) of the first family consisting in particular of carbon and the coarse fibres (30) of the second or further family consisting of glass.

8. A method in accordance with one of the claims 1 to 7, **characterized in that** impregnated fibre strands (2) are used for the first family and **in that** an impregnation of less than 20 %, preferably less than 5 % is carried out - related to a maximum capacity of plastic which can be taken up.

## Revendications

1. Procédé de fabrication d'un matériau composite (1) étendu en surface avec des fibres (20, 30) et une imprégnation de matière plastique (21), lequel matériau composite comprend au moins un premier et un deuxième groupe de boyaux de fibres (2, 3) parallèles, en forme de faisceaux ou de rubans qui, s'étendant dans différentes directions, forment un tissu, une tresse ou une grille, sachant que le premier groupe consiste en des boyaux de fibres (2) non imprégnés et que les boyaux de fibres sont tissés, tressés, respectivement amenés dans la forme d'une grille dans une première étape du procédé pour donner un tissu, une tresse ou une grille,
**caractérisé en ce que** dans une deuxième étape du procédé, on effectue une imprégnation sous pression, lors de laquelle le tissu, la tresse ou la grille est tiré dans la direction des fibres (20) du premier groupe à travers un bain d'imprégnation (4), lors de quoi les boyaux de fibres (2) du premier groupe absorbent lors du renvoi autour d'axes du bain d'imprégnation des quantités de matière plastique (21) plus élevées que les boyaux de fibres (3) du deuxième groupe et ainsi le matériau composite (1) est configuré rigide dans la direction des fibres (20) du premier groupe et flexible transversalement par rapport à cette direction.

2. Procédé selon la revendication 1, **caractérisé en ce que** dans la première étape, des boyaux de fibres (2, 3) non imprégnés sont tissés pour donner un tissu, sachant que les boyaux de fibres (2) à rigidifier sont utilisés à la formation d'une chaîne du tissu et les autres boyaux de fibres (3) à une incorporation de trame.

3. Procédé selon la revendication 1 ou 2, **caractérisé en ce que**, lors de la première étape, des ouvertures sont laissées entre les boyaux de fibres (2, 3).

4. Procédé selon l'une des revendications 1 à 3, **caractérisé en ce que** l'on utilise dans un tissu pour les boyaux de fibres (2) du premier groupe des fibres (20) nettement plus fines que pour les boyaux de fibres (3) du deuxième groupe.

5. Procédé selon l'une des revendications 1 à 4, **caractérisé en ce que** l'imprégnation est effectuée de telle sorte que les boyaux de fibres (2) du premier groupe comportent une imprégnation qui, rapportée à la capacité maximale en matière plastique absorbable, est d'au moins 35 %, tandis que l'imprégnation des autres boyaux de fibres (3, 3', 3a, 3b) est inférieure à 20 %, de préférence inférieure à 5 %.

6. Procédé selon l'une des revendications 1 à 5, **caractérisé en ce que** l'on utilise pour l'imprégnation une matière thermoplastique à laquelle une matière thermodurcissable et/ou un matériau pulvérulent inorganique peuvent être mélangés.

7. Procédé selon l'une des revendications 1 à 6, **caractérisé en ce qu'**un tissu est produit, pour lequel les fibres (20) du premier groupe présentent des diamètres considérablement plus petits que les fibres (30) du deuxième groupe ou de groupes suivants, sachant qu'en particulier les fibres fines (20) du premier groupe consistent en carbone et les fibres grosses (30) du deuxième groupe ou des groupes suivants en verre.

8. Procédé selon l'une des revendications 1 à 7, **caractérisé en ce que** l'on utilise pour le premier groupe des boyaux de fibres (2) imprégnés et qu'une imprégnation de moins de 20 %, de préférence de moins de 5 %, rapportés à la capacité maximale en plastique absorbable, est effectuée.
